# EUROPEAN PATENT APPLICATION

(11) **EP 1 727 355 A2**
(43) Date of publication of application: **29.11.2006**
(21) Application number: 06007181.8
(22) Date of filing: 05.04.2006
(51) Int. Cl.: H04N 5/225

(54) **Direction-turning device for the lens of a camera phone**

(30) Priority: 27.05.2005 CN 200510072045
(71) Applicant: Hwang, Jin-Chyuan, Ren De T'ai nan (TW)
(72) Inventor: Hwang, Jin-Chyuan, Ren De T'ai nan (TW)
(74) Representative: Casalonga, Axel

(57) **Abstract**

A direction-turning device for the lens of a camera phone is contained in a chamber dug through the front side of to the rear side of the camera phone and covered with a transparent window at its front and rear opening respectively, including a lens base fitted in the chamber and having a lens in the sidewa-11 for shooting pictures, and a driving unit able to activate the lens base to rotate to let the lens to face toward the front side or the rear side of the phone through the transparent windows. Therefore, the invention is totally hidden in the chamber and able to optionally shift the lens to face toward the front side of the phone for self-shooting or the rear side of the phone for shooting normally.

## Description

This invention relates to a direction-turning device for the lens of a camera phone, particularly to one that is able to hide the lens in the camera phone and shift the lens to face toward the front side of the phone for self-shooting or the rear side of the phone for shooting normally.

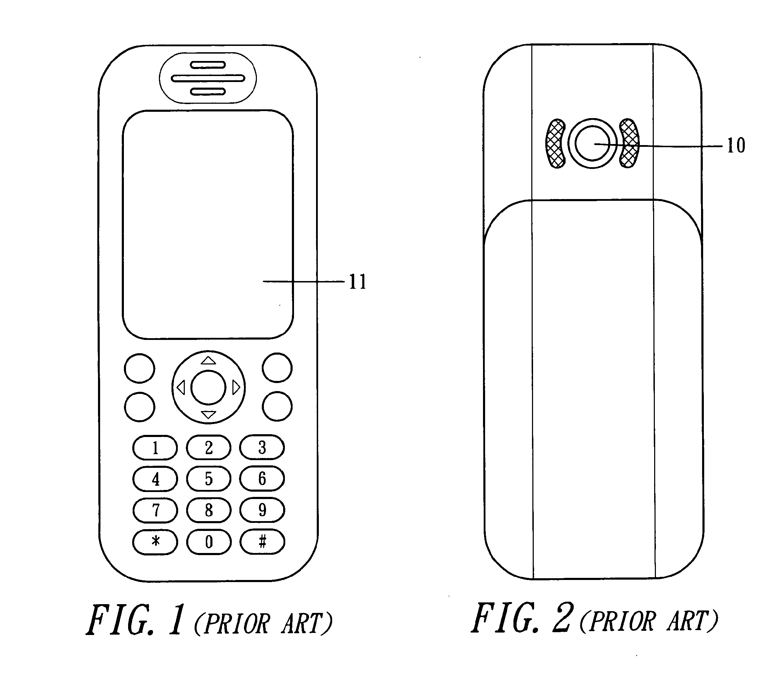

As shown in Figs. 1 and 2, a first non-foldable conventional camera phone is provided with a lens 10 fixed immovable in the back, so that the lens is to aim forward while a user holds the camera phone and views images seen through the lens on a screen 11 in the front of the phone, convenient for a user to take a picture. But, if a user wants to take a self-shooting picture, he has to stand in front of a mirror and keep the lens aimed at the portrait in the mirror for shooting, really inconvenient for self-shooting.

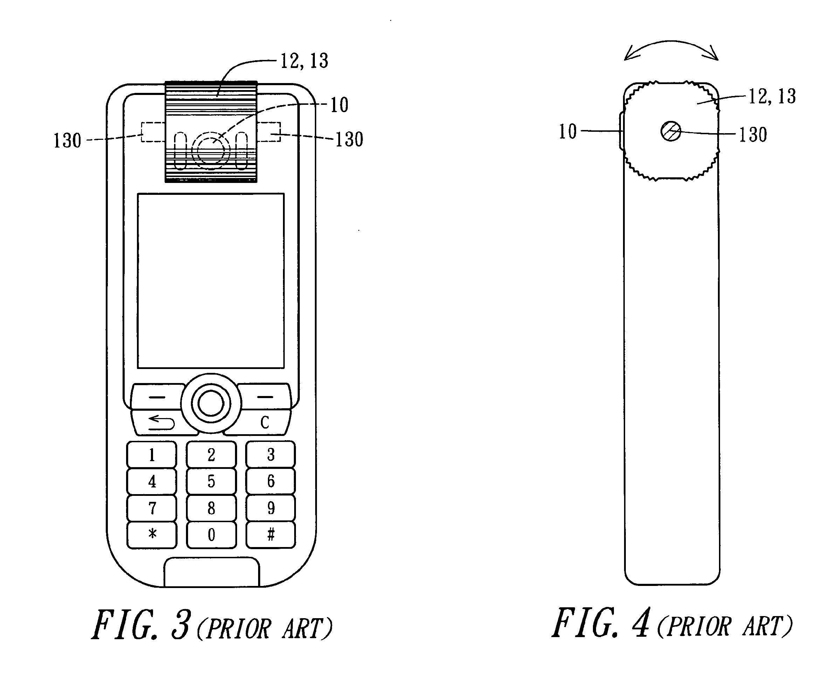

Next, as shown in Figs. 3 and 4, a second non-foldable camera phone is provided with a gap 12 in the top for fitting with a lens base 13, which is provided with a shaft 130 at its two ends respectively for connecting pivotally with an interior wall of the gap 12 so that the lens base 13 can be turned around to enable the lens 10 to face forwards for normal shooting or backwards for self-shooting. But, the gap 12 formed in the front top of the phone is aesthetically downgraded tremendously.

This invention has been revised to overcome the defects mentioned above.

The objective of this invention is to offer a direction-turning device for the lens of a camera phone.

The main characteristics of the invention contained in a chamber dug through the front side of to the rear side of the camera phone and covered with a transparent window at its front and rear side opening respectively, includes a lens base fitted in the chamber and having a lens in the sidewall for shooting pictures, a driving unit able to activate the lens base to rotate for 180 degrees to let the lens to face toward the front side or the rear side of the phone through the transparent windows. Therefore, the invention is totally hidden in the chamber and able to optionally shift the lens to face toward the front side of the phone for self-shooting or the rear side of the phone for shooting normally.

This invention is better understood by referring to the accompanying drawings, wherein:
Fig. 1 is a front view of a first conventional non-foldable camera phone;
Fig. 2 is a rear view of the first conventional non-foldable camera phone;
Fig. 3 is a front view of a second conventional non-foldable camera phone;
Fig. 4 is a rear view of the second conventional non-foldable camera phone;
Fig. 5 is a perspective view of a first preferred embodiment of a direction-turning device for the lens of a camera phone in the present invention;
Fig. 6 is a partial exploded perspective view of the first preferred embodiment of a direction-turning device for the lens of a camera phone in the present invention;
Fig. 7 is a partial front view of the first preferred embodiment of a direction-turning device for the lens of a camera phone in the present invention;
Fig. 8 is a partial side view of the first preferred embodiment of a direction-turning device for the lens of a camera phone in the present invention;
Fig. 9 is a partial bottom view of the first preferred embodiment of a direction-turning device for the lens of a camera phone in the present invention;
Fig. 10 is an upper view of the first preferred embodiment of a direction-turning device for the lens of a camera phone in the present invention, showing its lens shifted to face toward the front side of the phone;
Fig. 11 is an upper view of the first preferred embodiment of a direction-turning device for the lens of a camera phone in the present invention, showing its lens shifted to face toward the rear side of the phone;
Fig. 12 is a perspective view of a second preferred embodiment of a direction-turning device for the lens of a camera phone in the present invention;
Fig. 13 is a partial exploded perspective view of the second preferred embodiment of a direction-turning device for the lens of a camera phone in the present invention;
Fig. 14 is an upper view of the second preferred embodiment of a direction-turning device for the lens of a camera phone in the present invention, showing its lens shifted to face toward the front side of the phone;
Fig. 15 is an upper view of the second preferred embodiment of a direction-turning device for the lens of a camera phone in the present invention, showing its lens shifted to face toward the rear side of the phone;
Fig. 16 is an exploded perspective view of a third preferred embodiment of a direction-turning device for the lens of a camera phone in the present invention;
Fig. 17 is a partial exploded perspective view of the third preferred embodiment of a direction-turning device for the lens of a camera phone in the present invention;
Fig. 18 is an upper view of the third preferred embodiment of a direction-turning device for the lens of a camera phone in the present invention, showing its lens shifted to face toward the front side of the phone; and
Fig. 19 is an upper view of the third preferred embodiment of a direction-turning device for the lens of a camera phone in the present invention, showing its lens shifted to face toward the rear side of the phone.

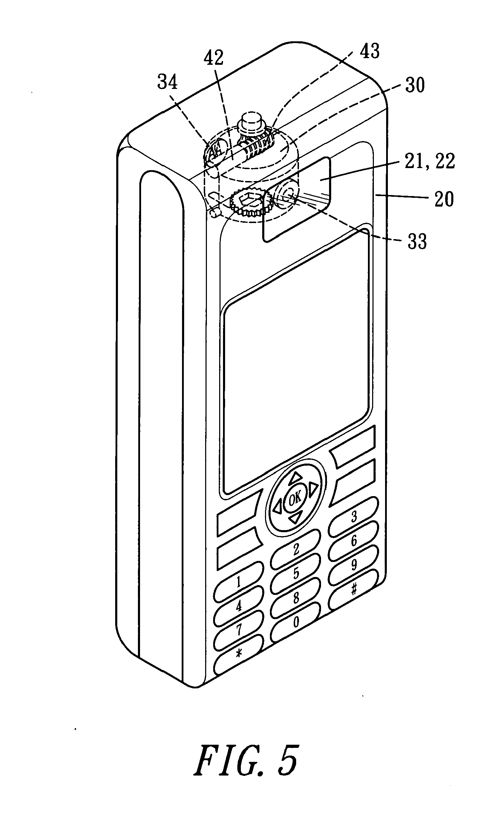

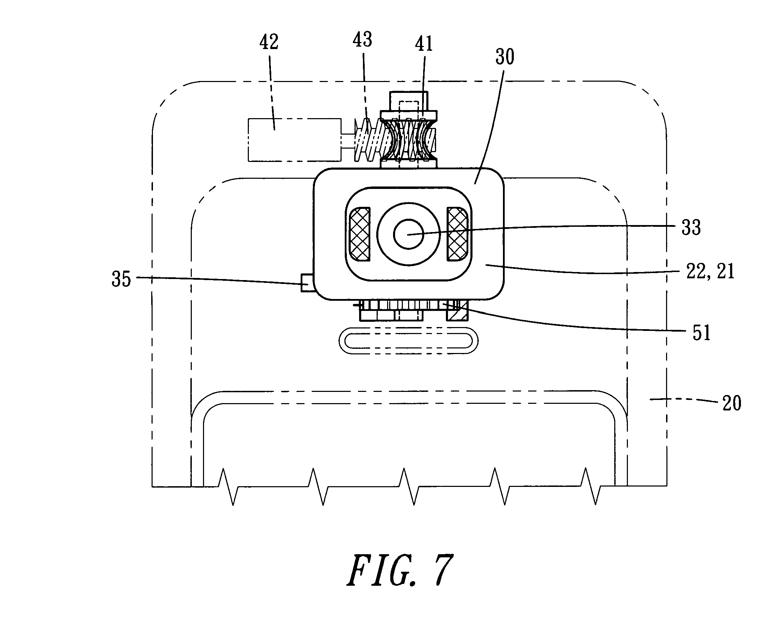

As shown in Figs. 5, 6 and 7, a first preferred embodiment of a direction-diverting device for the lens of a camera phone 20 in the present invention includes a lens base 30, a driving unit 40, and a positioning unit 50. The camera phone 20 is provided with a chamber 21 dug through the front side to the rear side in an upper portion and covered with a transparent window 22 at a front and rear side opening respectively.

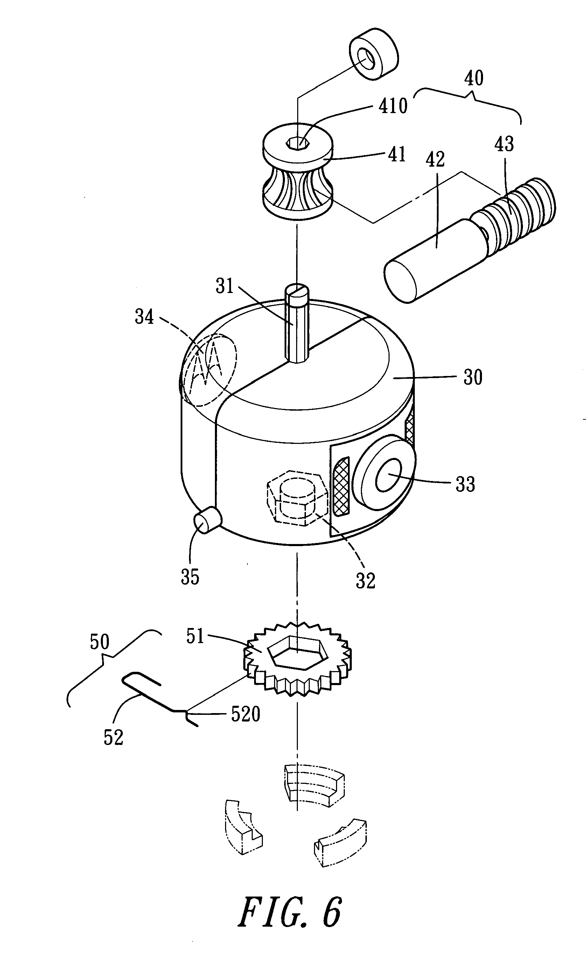

The lens base 30, as shown in Fig. 6, is provided with an upper pivot 31 extending up from the upper side, a lower pivotal bar 32 extending up from the lower side, a lens 33'fixed in the sidewall, a trademark signal 34 located in the sidewall opposite to the lens 33 and lit up when the phone gets a call. The upper and lower pivot 31 and 32 are supported pivotally in the interior wall of the chamber 21 so that the lens base 30 is pivotally installed in the chamber 21. The lowermost end of the upper pivot 31 and the lower pivot 32 are shaped polygonal and the upper end of the upper pivot 31 is shaped round.

The driving unit 40, as shown in Fig. 6, able to be controlled to start operating by a button on the phone and activate the lens base 30 to turn back and forth for 180 degrees, is provided with a worm gear 41 having a center hole 410 with the same shape as the upper pivot 31, for engaging with the upper pivot 31 so that the worm gear 41 is linked and rotates together with the lens base 30. A motor 42 is provided to drive a worm 43 that engages with the worm gear 41, simultaneously keeping the lens base 30 to rotate.

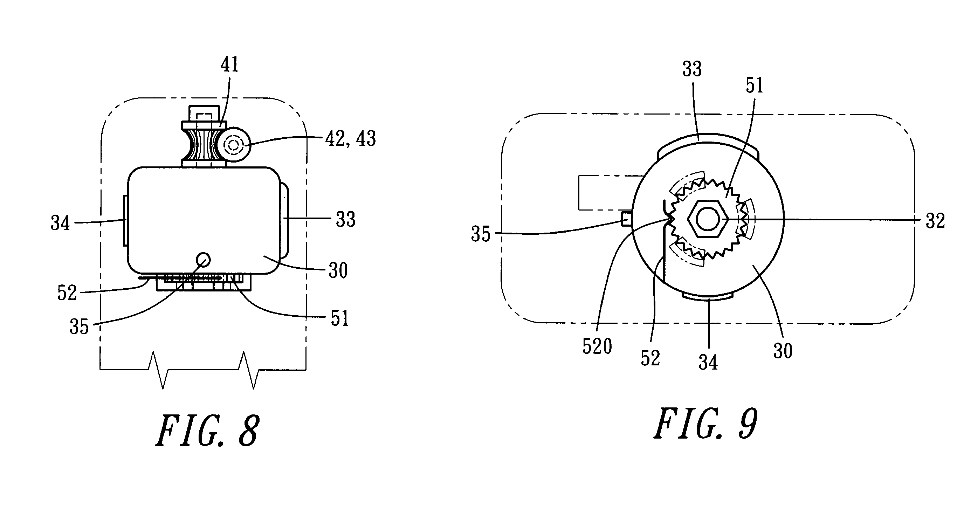

The positioning unit 50, as shown in Fig. 6, is provided with an auxiliary gear 51 fixed tightly with the lower pivot 32 of the lens base 30, and an elastic locking wire 52 possessing a conical hump 520 protruded to always fit in a gap between two teeth of the auxiliary gear 51, as shown in Fig. 9. Whenever the auxiliary gear 51 and the lens base 30 stay immovable or are ceased to rotate during the process of rotating, the lens base 30 can be immediately positioned securely and stably by means of the conical hump 520 stopping the auxiliary gear 51. In addition, a blocker 35 fixed projecting on a preset lower portion of the sidewall of the lens base 30 can stop the lens base 30 after rotated for 180 degrees. Of course, the blocker 35 can be replaced with an electronic sensing device, which is composed of two sensors set in the sidewall of the lens base 30 and the camera phone 20 respectively are able to sense each other when they approach to face each other, stopping the driving unit 40 from operating.

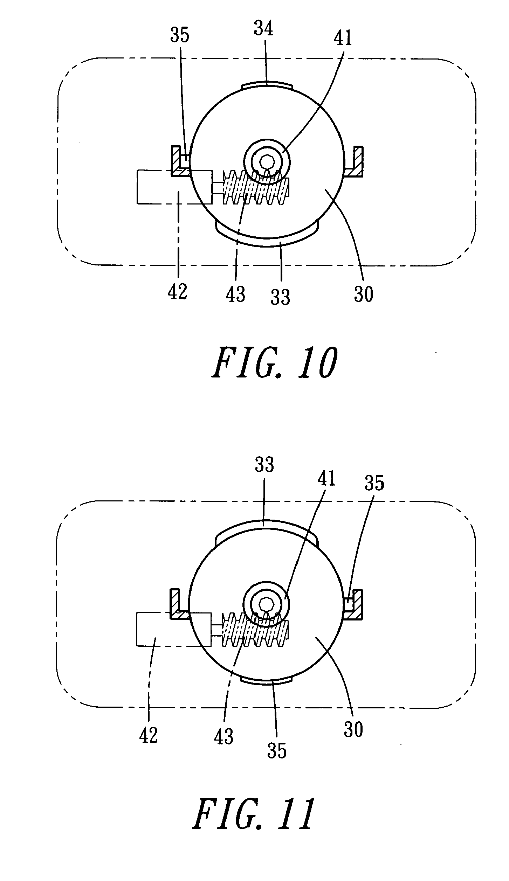

In using, as shown in Fig. 5 - 7, press first the controlling button to start activating the motor 42 so as to drive the worm 43 and the worm gear 41 to rotate successively. Then, the auxiliary gear 51 and the lens base 30 are of course activated to move, enabling the lens 33 of the lens base 30 to face toward the front side of the phone for shooting oneself, as shown in Fig. 10, or the rear side of the phone for shooting normally, as shown in Fig. 11. And, since the auxiliary gear 51 can be always locked by the conical hump 520 of the elastic locking wire 52, the lens base 30 is to be immediately positioned securely and stably whenever it is shifted to a needed position and ceased to move, as shown in Fig. 9. Moreover, when the lens 33 is facing toward the front side of the phone 20, the signal 34 is just facing toward the rear side of the phone 20, and, on the contrary, they can exchange locations, therefore the lens 30 between the transparent windows 22 does not give a monotonous impressing.

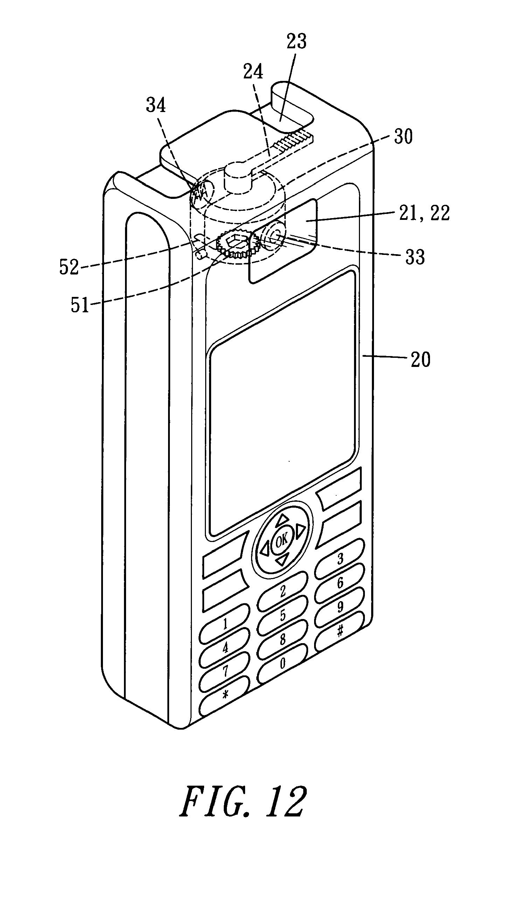

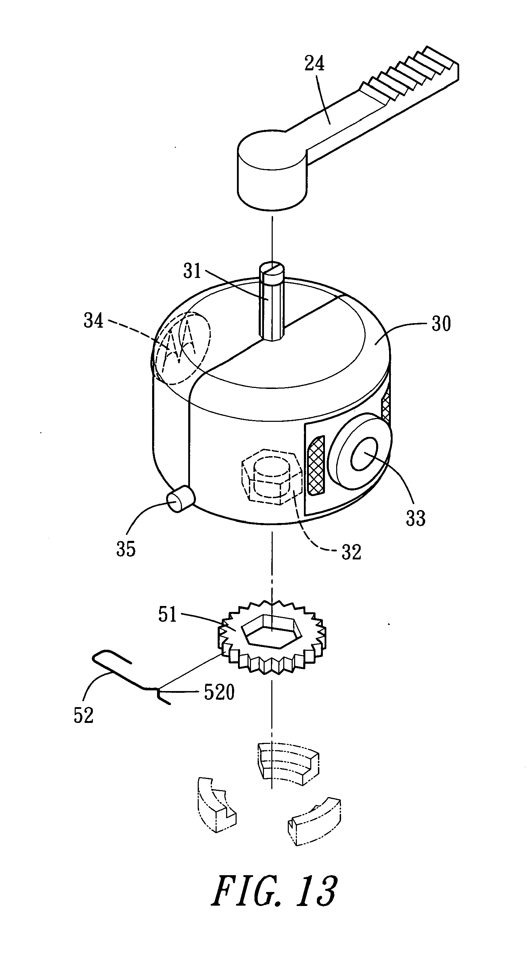

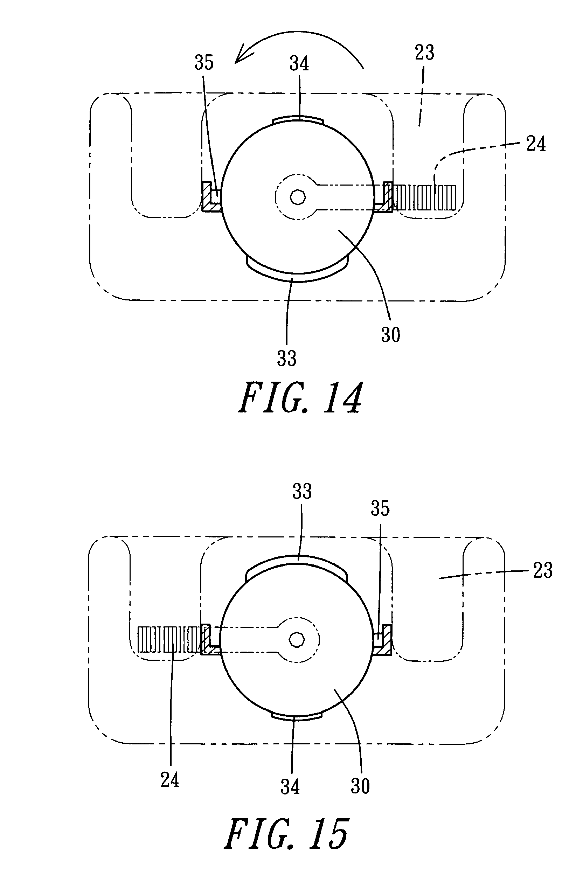

Next, as shown in Figs. 12 - 15, a second preferred embodiment of a direction-turning device for the lens of a camera phone in the present invention has mostly the same components as the first embodiment does, except that the driving unit 40 is replaced with a manual device, which is provided with a wrench 24 having one of the two ends fixed together with the top end of the upper pivot 31 and the other end lain in either of two grooves 23 in the top of the phone 20 at two sides of the upper pivot 31 of the lens base 30 respectively. When the wrench 24 is moved to swing for 180 degrees, so are the lens base 30 and the lens 33 moved for the same angle, keeping the lens 33 facing toward the front side of the phone 20, as shown in Fig. 14, or the rear side of the phone 20, as shown in Fig. 15.

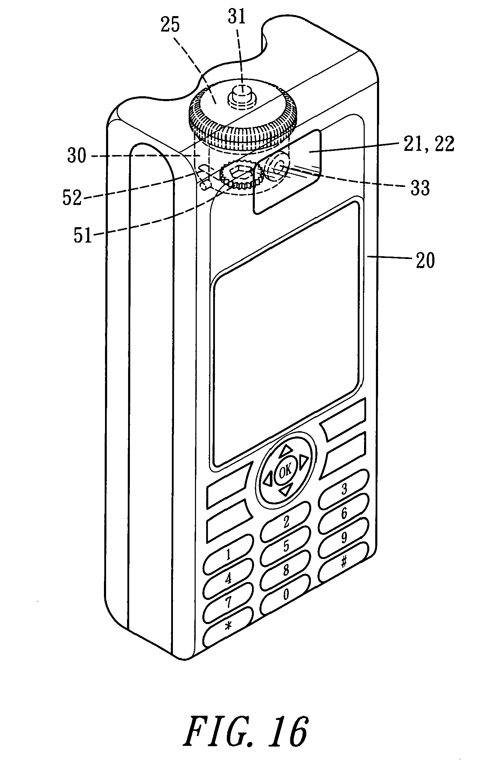

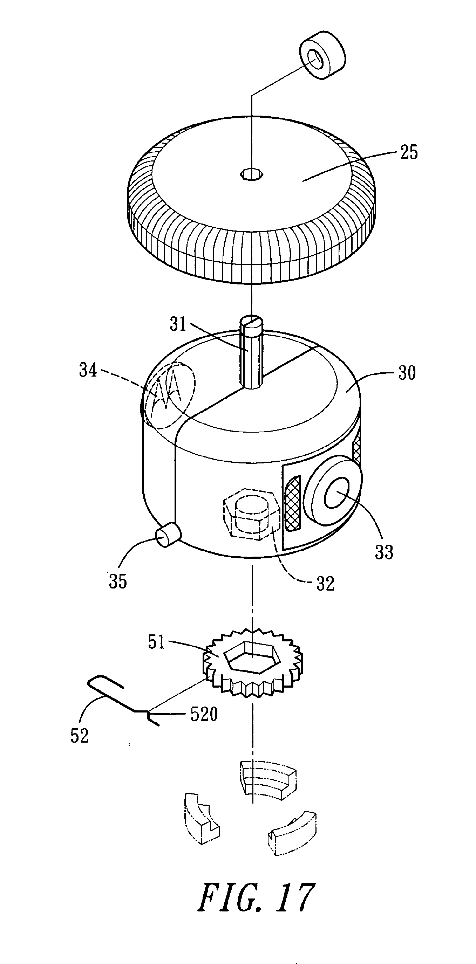

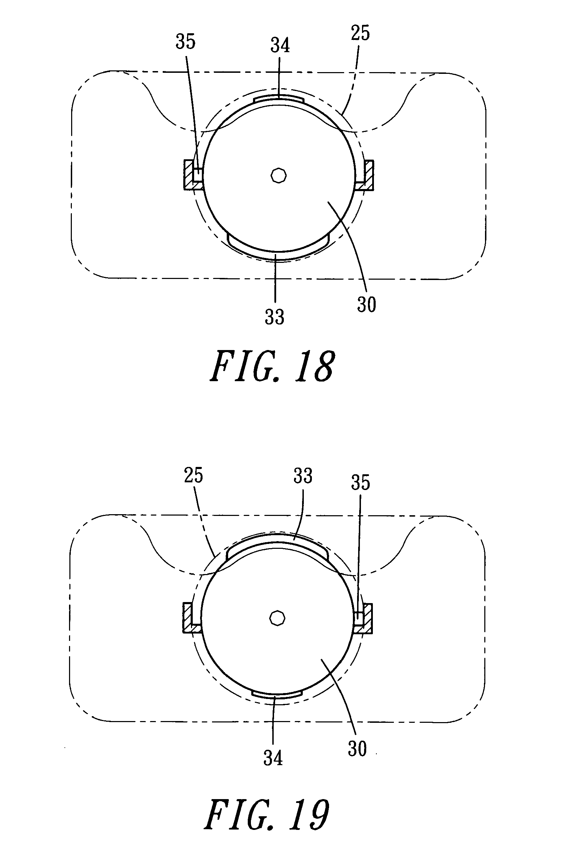

As shown in Figs. 16 - 19, the wrench 24 in the second preferred embodiment can also be replaced with a toothed rotator 25 partly exposed outside the phone 20 for a finger to move it, enabling the lens 33 of the lens base 30 to be rotated to face toward the front side of the phone 20, as shown in Fig. 18, or the rear side of the phone 20, as shown in Fig. 19.

While the preferred embodiment of the invention has been described above, it will be recognized and understood that various modifications may be made therein and the' appended claims are intended to cover all such modifications that may fall within the spirit and scope of the invention.

## Claims

1. A direction-turning device for the lens of a camera phone provided with a chamber dug through front side to a rear side and covered with a transparent window at a front and a rear side opening respectively, said device comprising:
a lens base connected pivotally in said chamber and provided with a lens installed in a sidewall, an upper pivot extending up from an upper side, a lower pivot 32 extending up from a lower side;
a driving unit able to activate said lens base rotate so as to keep said lens facing toward said window at the front side of said camera phone or the rear side of said camera phone; and
a positioning unit enabling said lens base to be immediately positioned securely and stably while said lens base is stopped from rotating.

2. A direction-diverting device for the lens of a camera phone as claimed in Claim 1, wherein said driving unit is provided with a worm gear fixed with said lower pivot of said lens base and a motor controlled by a button on said phone and a worm driven by said motor and engaging with said worm gear, and able to activate said lens base to rotate or stop electrically.

3. A direction-turning device for the lens of a camera phone as claimed in Claim 1, wherein said driven member is provided with a wrench fixed together with said upper pivot, and able to be moved manually to activate said lens base to rotate.

4. A direction-turning device for the lens of a camera phone as claimed in Claim 1, wherein said driven unit is provided with a toothed rotator fixed together with said upper pivot and partly exposed outside said phone so as to be moved manually to drive said lens base to rotate.

5. A direction-turning device for the lens of a camera phone as claimed in Claim 1, wherein said positioning unit is provided with an auxiliary gear fixed together with said lower pivot and an elastic locking wire set beside said auxiliary gear and possessing a conical hump protruded to always fit in a gap between two teeth of said auxiliary gear so that said lens base may be immediately positioned securely and stably after it is stopped from rotating.

6. A direction-turning device for the lens of a camera phone as claimed in Claim 1, wherein said lens base is provided with a blocker on the sidewall to prevent said lens base from moving.

7. A direction-turning device for the lens of a camera phone as claimed in Claim 2, wherein two sensors installed in the sidewall of said lens base and said phone respectively are to command said driving unit to cease working while they approach and face each other.
